(19) Europäisches Patentamt
European Patent Office
Office européen des brevets

(11) **EP 3 226 632 A1**

(12) **EUROPEAN PATENT APPLICATION**
published in accordance with Art. 153(4) EPC

(43) Date of publication:
04.10.2017 Bulletin 2017/40

(51) Int Cl.:
*H04W 72/04* (2009.01)

(21) Application number: 15862477.5

(22) Date of filing: 27.04.2015

(86) International application number:
PCT/CN2015/077541

(87) International publication number:
WO 2016/082453 (02.06.2016 Gazette 2016/22)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA

(30) Priority: 24.11.2014 CN 201410683091

(71) Applicant: ZTE Corporation
Shenzhen, Guangdong 518057 (CN)

(72) Inventors:
• CHEN, Lin
Shenzhen
Guangdong 518057 (CN)
• ZHANG, Fang
Shenzhen
Guangdong 518057 (CN)
• RUAN, Yufeng
Shenzhen
Guangdong 518057 (CN)

(74) Representative: Novagraaf Technologies
Bâtiment O2
2, rue Sarah Bernhardt
CS90017
92665 Asnières-sur-Seine Cedex (FR)

(54) **VIRTUAL CELL RESOURCE ALLOCATION METHOD, DEVICE AND SYSTEM**

(57) The present disclosure relates to the field of mobile communications. Provided are a method for allocating virtual cell resource, apparatus and system, capable of solving the problem of absence of a resource scheduling mechanism for data transmission in a virtual cell. The method includes: a Master TP selects, according to demands of a UE, a Slave TP serving as a target TP; and the Master TP instructs the UE to perform data transmission with the target TP. The technical solution provided in the present disclosure is applicable to UDN, and achieves a resource negotiation for a high average user throughput.

Fig. 2

## Description

## Technical Field

The present disclosure relates to the field of mobile communications, and more particularly to a method, device and system for allocating virtual cell resource.

## Background

To achieve these 5G purposes: mobile data traffic increase for 1000 times per region, throughput increase for 10 to 100 times per user, increase of number of connecting devices for 10 to 100 times, prolonging of battery life of a low-power device for 10 times and decrease of an end-to-end delay for 5 times, some new radio technology solutions must be proposed in 5G. Herein, Ultra-Dense Networks (UDNs) are important means for achieving first two indexes of 5G. A key technology for the UDNs is to enable a great number of points to effectively co-exist within a dense range in a homogeneous or heterogeneous manner. Meanwhile, whilst the capacity is greatly improved as for a UDN scenario, a severe challenge is given to the mobility. In order to effectively solve the problem about the mobility, a concept of a virtual cell of which a User Equipment (UE) serves as the center is provided in a 5G research. When the UE moves, a virtual cell is formed by taking the UE as the center on the basis of consideration. The virtual cell is composed of a Master Transmission Point (Master TP) and a plurality of Slave TPs, where the Master TP is a control anchor point, taking charge of all high-layer control signaling, executing radio resource scheduling and control, and solving conflicts in a resource allocation process; and the Slave TPs are used for coordinated data transmission according to an instruction of the Master TP. Data transmission of the virtual cell may be divided into two categories. In category one, multiple members of the virtual cell participate in data transmission simultaneously, namely transmission of both identical data and different data. In category two, only one member in the virtual cell participates in data transmission at the same time.

At present, a corresponding scheduling mechanism has not been proposed as for the second data transmission mode namely a mode that only one member in the virtual cell participates in data transmission at the same time.

## Summary

The embodiments of the present disclosure provide a method, device and system for allocating virtual cell resource, so as to solve the problem of absence of a resource scheduling mechanism for data transmission in a virtual cell.

According to an embodiment of the present disclosure, a method for allocating virtual cell resource may include: a Master TP selects, according to demands of a UE, a Slave TP serving as a target TP; the Master TP instructs the UE to perform data transmission with the target TP.

In some embodiments, the step that a Master TP selects, according to demands of a UE, a Slave TP serving as a target TP may include: the Master TP collects measurement information periodically reported by each Slave TP, and the measurement information contain: an uplink Channel Quality Indicator (CQI), Physical Resource Block (PRB) occupation information, a historical service throughput and a logic channel buffer occupation rate; the Master TP collects Channel State Information (CSI), reported by the UE, of each virtual cell member; the Master TP calculates, according to the measurement information and the CSI, a Proportional Fairness factor (PF) value of each Slave TP; and the Master TP selects a Slave TP that is capable of allocating resources to perform data transmission with the UE and has a maximum PF value to serve as a target TP.

In some embodiments, the step that the Master TP selects a Slave TP that is capable of allocating resources to perform data transmission with the UE and has a maximum PF value to serve as a target TP may include: the Master TP sends a resource allocation request message to a Slave TP having a maximum PF value, the resource allocation request message contain: the number of needed RBs, a position index of an RB, start time and duration time of subframe scheduling, and a Media Access Control Packet Data Unit Sequence Number (MAC PDU SN) specifically scheduled; and when receiving a resource allocation acknowledgement message that is sent by the Slave TP having the maximum PF value and contains an accepting cell, the Master TP selects the Slave TP as a target TP, and sends the resource allocation acknowledgement message to the target TP.

In some embodiments, after the Master TP sends the resource allocation request message to the Slave TP having the maximum PF value, the method may further include: when receiving resource allocation request messages sent by Master TPs of multiple different virtual cells, the Slave TP judges whether resources requested by the resource allocation request messages of the Master TPs from the multiple different virtual cells have conflicts; when the resources requested by the resource allocation request messages of the Master TPs from the multiple different virtual cells have conflicts, the Slave TP selectively sends a resource allocation acknowledgement message containing an accepting cell to a sender namely a Master TP of a resource allocation request message having an early arrival time granularity, and sends a resource allocation acknowledgement message containing a rejection cell to a sender namely a Master TP of other resource allocation request messages; or, the Slave TP selectively sends a resource allocation acknowledgement message containing an accepting cell to a sender namely a Master TP of a resource allocation request message having a small start subframe in resource allocation request messages having the same arrival time granularity, and sends a resource allocation acknowledgement message containing a rejection cell to a sender namely a Master TP of other resource allocation request messages.

In some embodiments, after the Slave TP judges whether resources requested by the resource allocation request messages of the Master TPs from the multiple different virtual cells have conflicts when receiving resource allocation request messages sent by Master TPs of multiple different virtual cells, the method may further include: when the resources requested by the resource allocation request messages of the Master TPs from the multiple different virtual cells do not have conflicts, the Slave TP sends the resource allocation acknowledgement message containing the accepting cell to the sender namely the Master TP of each resource allocation request message.

In some embodiments, after the Master TP sends the resource allocation request message to the Slave TP having the maximum PF value, the method may further include: the Master TP receives a rejection response message sent by the Slave TP; and the Master TP sends resource allocation request messages to the Slave TPs in sequence in a descending order of the PF value and receives response messages returned by the Slave TPs until a resource allocation acknowledgment message that is returned by a Slave TP and contains an accepting cell is received, wherein the Slave TP that sends the resource allocation acknowledgment message containing the accepting cell serves as a target TP.

In some embodiments, the step that the Master TP calculates, according to the measurement information and the CSI, a PF value of each Slave TP may specifically include: the Master TP calculates the PF value by using the following formula:

$$PF_i = \frac{\sum_{j=1}^{RBNum} \sum_{k=1}^{RankNum} BitNum(j,k)}{\alpha_{RlcBuff}},$$

where $i = 1,..., n$, *RBNum* is number of RBs capable of being allocated by a Slave TP, *RBNum* is number of Rank Indications (RIs) in reported CSI, and BitNum is number of bits borne by a single RB calculated according to a symbol efficiency mapped by a CQI value.

In some embodiments, the step that the Master TP instructs the UE to perform data transmission with the target TP may include: the Master TP informs the UE of a resource scheduling result through a Radio Resource Control (RRC) connecting reconfiguration message, and instructs the UE to perform data transmission with the target TP, the RRC connecting reconfiguration message contain: an Identifier of Base Station (ID) of a target TP and resource allocation acknowledgment information.

According to another embodiment of the present disclosure, a device for allocating virtual cell resource may include: a target TP selection module, configured to select, according to demands of a UE, a Slave TP serving as a target TP; and a transmission control module, configured to instruct the UE to perform data transmission with the target TP.

In some embodiments, the target TP selection module may include: a measurement information collection unit, configured to collect measurement information periodically reported by each Slave TP, the measurement information contain: uplink CQI information, PRB occupation information, a historical service throughput and a logic channel buffer occupation rate; a CSI collection unit, configured to collect CSI, reported by the UE, of each virtual cell member; a PF value calculation unit, configured to calculate, according to the measurement information and the CSI, a PF value of each Slave TP; and a point selection unit, configured to select a Slave TP that is capable of allocating resources to perform data transmission with the UE and has a maximum PF value to serve as a target TP.

In some embodiments, the point selection unit may include: a request sending subunit, configured to send a resource allocation request message to a Slave TP having a maximum PF value, the resource allocation request message contain: the number of needed RBs, a position index of an RB, start time and duration time of subframe scheduling, and an MAC PDU SN specifically scheduled; and a resource allocation subunit, configured to select, when receiving a resource allocation acknowledgement message that is sent by the Slave TP having the maximum PF value and contains an accepting cell, the Slave TP to serve as a target TP, and send the resource allocation acknowledgement message to the target TP.

In some embodiments, the transmission control module may include: a reconfiguration instructing unit, configured to inform the UE of a resource scheduling result through an RRC connecting reconfiguration message, and instruct the UE to perform data transmission with the target TP, the RRC connecting reconfiguration message contain: an ID of a target TP and resource allocation acknowledgment information.

According to an embodiment of the present disclosure, a system for allocating virtual cell resource is further provided, and the system may include a UE in an identical virtual cell, a Master TP and a plurality of Slave TPs.

The Master TP may be configured to select, according to demands of the UE, a Slave TP serving as a target TP, and instruct the UE to perform data transmission with the target TP.

In some embodiments, the Slave TP may be configured to: judge, when receiving resource allocation request messages sent by Master TPs of multiple different virtual cells, whether resources requested by the resource allocation request messages of the Master TPs from the multiple different virtual cells have conflicts; when the resources requested by the resource allocation request messages of the Master TPs from the multiple different virtual cells have conflicts, selectively send a resource allocation acknowledgement message containing an accepting cell to a sender namely a Master TP of a resource allocation request message having an early arrival time granularity, and send a resource allocation acknowledgement message containing a rejection cell to a sender namely a Master TP of other resource allocation request messages; or,

selectively send a resource allocation acknowledgement message containing an accepting cell to a sender namely a Master TP of a resource allocation request message having a small start subframe in resource allocation request messages having the same arrival time granularity, and send a resource allocation acknowledgement message containing a rejection cell to a sender namely a Master TP of other resource allocation request messages.

In the provided methods, devices and systems for allocating virtual cell resource, a Master TP selects, according to demands of a UE, a Slave TP serving as a target TP; and the Master TP instructs the UE to perform data transmission with the target TP. A resource negotiation for a high average user throughput is achieved, and the problem of absence of a resource scheduling mechanism for a data transmission process in a virtual cell is solved.

## Brief Description of the Drawings

Fig. 1 is a schematic diagram of an application scenario according to an embodiment of the present disclosure;
Fig. 2 is a flowchart of a method for allocating virtual cell resource according to embodiment 1 of the present disclosure;
Fig. 3 is a schematic diagram of a CSI measurement process;
Fig. 4 is a schematic diagram of an uplink CQI measurement process;
Fig. 5 is a flowchart of a method for allocating virtual cell resource according to embodiment 2 of the present disclosure;
Fig. 6 is a structural diagram of a device for allocating virtual cell resource according to embodiment 3 of the present disclosure;
Fig. 7 is a structural diagram of a target TP selection module 601 in Fig. 6;
Fig. 8 is a structural diagram of a point selection unit 704 in Fig. 7; and
Fig. 9 is a structural diagram of a transmission control module 602 in Fig. 6.

## Detailed Description of the Embodiments

Data transmission of a virtual cell may be divided into two classes: 1, multiple members of the virtual cell participate in data transmission simultaneously, namely transmission of both identical data and different data; and 2, only one member in the virtual cell participates in data transmission at the same time.

At present, a corresponding scheduling mechanism has not been proposed as for the second data transmission mode namely a mode that only one member in the virtual cell participates in data transmission at the same time.

The embodiments of the present disclosure provide a method for allocating virtual cell resource, device and system. The embodiments of the present disclosure will be illustrated hereinbelow in conjunction with the drawings in detail. It is important to note that embodiments in the present application and features in the embodiments may be combined under the condition of no conflicts.

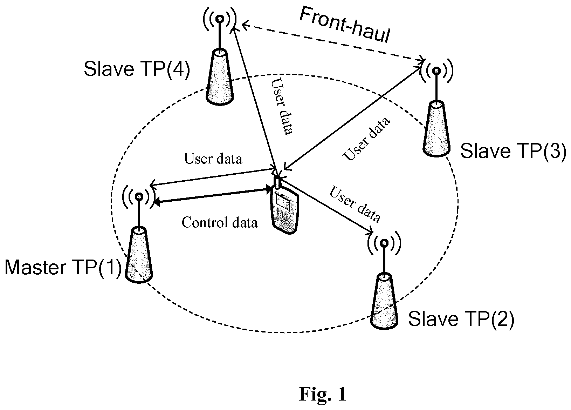

Fig. 1 is a schematic diagram of an application scenario according to an embodiment of the present disclosure. The application scenario of the embodiments of the present disclosure is as shown in Fig. 1. TP1, TP2, TP3 and TP4 constitute a virtual cell, each TP having an independent PDCP layer, wherein TP1 is a Master TP of the virtual cell, and other TPs are Slave TPs of the virtual cell. The Master TP is a high-layer control anchor point, generating all high-layer control signaling, executing allocation of all scheduling and radio resources, and solving conflicts in a resource allocation process; and the Slave TPs are used for coordinated data transmission according to an instruction of the Master TP. The TPs are connected with a core network through a cable Backhaul interface, and coordination between the TPs is realized through a radio Fronthaul interaction control signaling. All base stations in the virtual cell share information such as a user identifier, an authentication/authorization key, an L2 connecting identifier and a necessary service context. The Master TP takes charge of processing control plane and user plane data of the user, and the Slave TPs only take charge of processing a data plane of the user. Due to signaling interaction between all members in the virtual cell through radio Fronthaul, a networking scenario falls within ideal Backhaul scenarios.

Embodiment 1 of the present disclosure will be illustrated below in conjunction with the drawings.

The embodiment of the present disclosure provides a method for allocating virtual cell resource. A Master TP selects, according to demands of a UE, a Slave TP serving as a target TP, and instructs the UE to perform data transmission with the target TP. The flow specifically includes a process of reporting, by all Slave TPs of a virtual cell, CSI, PRB occupation information, a historical service throughput and a logic channel buffer occupation rate to the Master TP, a dynamic decision process of the TPs of the virtual cell, a resource negotiation process in the virtual cell and a resource negotiation process between virtual cells.

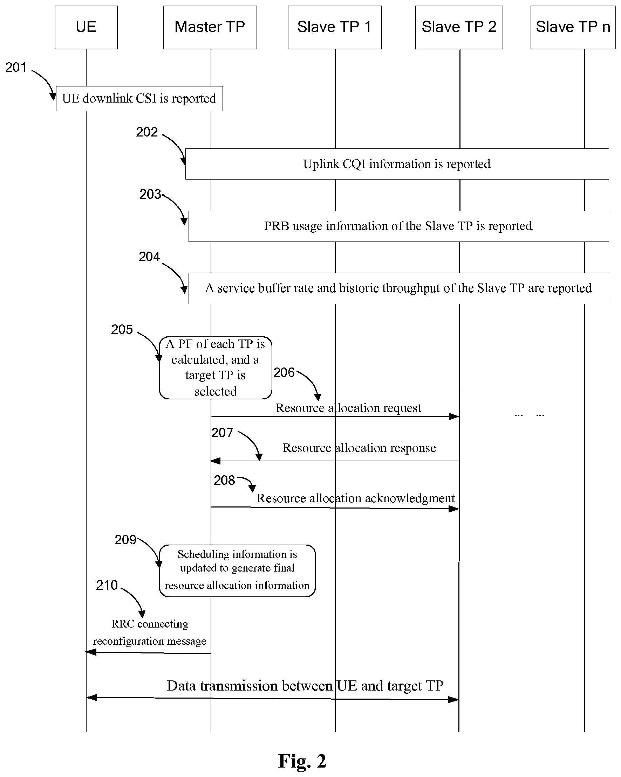

Fig. 2 is a flowchart of a method for allocating virtual cell resource according to embodiment 1 of the present disclosure. As shown in Fig. 2, the specific flow includes the steps as follows.

Step 201: The Master TP collects CSI, reported by the UE, of each virtual cell member.

In the embodiment of the present disclosure, the Master TP specifically is a Master TP, and the Slave TP specifically is a Slave TP.

In the present step, the Master TP issues a CSI measurement command to the UE, and the UE periodically reports a downlink CSI measurement report to the Master TP, the CSI measurement report including Precoding Matrix Indicator (PMI)/CQI/RI information of virtual cell members namely the Master TP and each Slave TP.

The Master TP periodically collects a CSI, reported by the UE, of each virtual cell member.

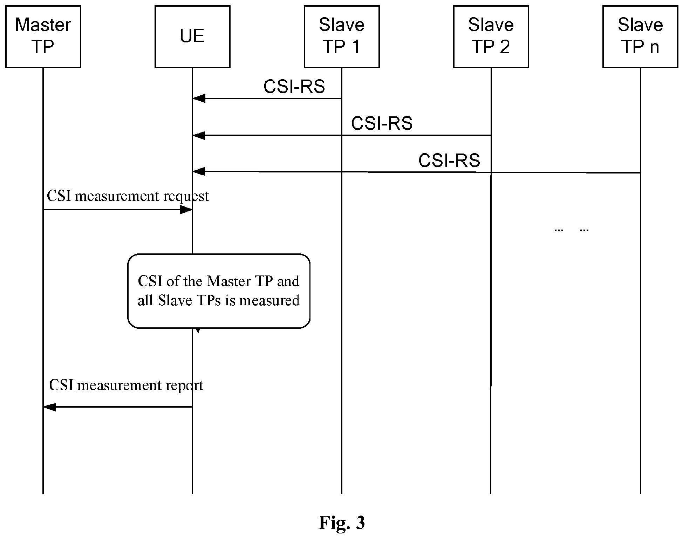

Fig. 3 is a schematic diagram of a CSI measurement process. The measurement process of downlink CSI of each TP in the virtual cell is as shown in Fig. 3. The Master TP issues a periodic measurement request to the UE, a measured cell including the Master TP and all Slave TPs in the virtual cell. The UE reports a CSI measurement report to the Master TP after measurement is completed. The CSI measurement report contains CSI of each TP in the virtual cell member. A specific content of CSI includes: PMI/CQI/RI.

Step 202: Each Slave TP in the virtual cell members reports measured uplink CQI information to the Master TP.

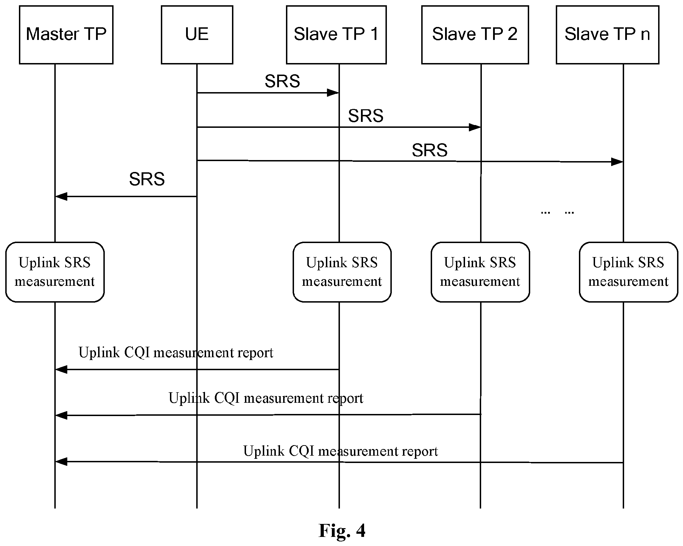

Fig. 4 is a schematic diagram of an uplink CQI measurement process. Measurement of an uplink CQI of each TP in the virtual cell is as shown in Fig. 4. Each TP in the virtual cell measures an uplink Sounding Reference Symbol (SRS) of the UE respectively, and each Slave TP reports a periodically measured uplink CQI result to the Master TP.

Step 203: Each Slave TP in the virtual cell members reports an MAC logic channel buffer occupation rate of a service and a historic throughput of the transmitted service to the Master TP.

The Master TP collects measurement information periodically reported by each Slave TP, the measurement information containing:

an uplink CQI, PRB occupation information, a historical service throughput and a logic channel buffer occupation rate.

Step 204: The Master TP calculates, according to the measurement information and the CSI, a PF value of each Slave TP.

In the present step, the Master TP calculates a PF of each Slave TP in the virtual cell members, and selects a Slave TP having a maximum PF value to serve as a target TP. A specific calculation formula for the PF value is as follows:

as for Slave TP $i$, the Proportional Fairness factor is calculated by

$$PF_i = \frac{\sum_{j=1}^{RBNum} \sum_{k=1}^{RankNum} BitNum(j,k)}{\alpha_{RlcBuff}},$$

where $i = 1,..., n$, $RBNum$ is number of RBs capable of being allocated by a Slave TP, $RankNum$ is number of RIs in reported CSI, and BitNum is number of bits borne by a single RB calculated according to a symbol efficiency mapped by a CQI value.

A target TP: $TargTPId=\max(PF_i)$, $i=1,...,n$.

Alternatively, considering the services throughput of the TP, calculation for the PF of Slave TP $i$ may by using:

$$PF_i = \frac{\sum_{j=1}^{RBNum} \sum_{k=1}^{RankNum} BitNum(i,j)}{1 + HistThrp} \cdot \alpha_{RlcBuff},$$

where $HistThrp$ is a historic services throughput of the point transmission.

Step 205: The Master TP selects a Slave TP having a maximum PF value to serve as a target TP.

In the embodiment of the present disclosure, the Master TP selects a Slave TP that is capable of allocating resources to perform data transmission with the UE and has a maximum PF value to serve as a target TP. If the Slave TP cannot serve as a target TP, a Slave TP having a subsequent priority (second large PF value) serves as a target TP.

Step 206: The Master TP sends a resource allocation request message to a Slave TP having a maximum PF value.

The step that the Master TP sends the resource allocation request message to the target Slave TP specifically includes: requesting for number of allocated RBs, a corresponding RB index, the start time of a subframe, duration time of scheduling, an MAC PDU SN to be scheduled, and a coordinated transmission mechanism: Coordinated Scheduling (CS).

Step 207: The target Slave TP decides whether to accept or reject the resource allocation request according to received resource allocation request results from other virtual cells.

If the resource allocation request does not have conflicts with RB resource allocation requests of other virtual cells, an accepting answer is returned through a resource allocation response message; if the resource allocation request has conflicts with RB resource allocation requests of other virtual cells and other RB resources are allocable, an updated RB index is returned; and if the above conditions are not satisfied, a rejection response is returned through a resource allocation response message.

Step 208: After receiving a resource allocation acknowledgement message, containing an accepting cell, of the target Slave TP, the Master TP sends the resource allocation acknowledgement message to the Slave TP.

When receiving a resource allocation acknowledgement message that is sent by the Slave TP having the maximum PF value and contains an accepting cell, the Master TP selects the Slave TP as a target TP, and sends the resource allocation acknowledgement message to the target TP.

The resource allocation acknowledgment message includes a Modulation and Coding Scheme (MCS) format and final resource allocation information (a finally determined number of RBs and a specific RB index).

In addition, when receiving a rejection response message sent by the Slave TP, the Master TP will send resource allocation request messages to the Slave TPs in sequence in a descending order of the PF value and receive response messages returned by the Slave TPs until a resource allocation acknowledgment message that is returned by a Slave TP and contains an accepting cell is received, wherein the Slave TP that sends the resource allocation acknowledgment message containing the accepting cell serves as a target TP. Specifically, if receiving the rejection response message of the Slave TP, the Master TP sends a resource allocation request message to a Slave TP having a lower PF priority, namely Step 205 to Step 207 are repeated.

Step 209: The Master TP updates scheduling information and generates final resource allocation information.

The resource allocation information mainly contains the number of RBs, a specific index, and start time and duration time of subframe scheduling. The generated resource allocation information is locally saved in the Master TP, and then may be sent to the UE through an RRC connecting reconfiguration message subsequently.

Step 210: The Master TP sends an RRC connecting reconfiguration message to the UE.

In the present step, the Master TP informs the UE of a resource scheduling result through the RRC connecting reconfiguration message, and instructs the UE to perform data transmission with the target TP, the RRC connecting reconfiguration message including: an ID of a target TP and resource allocation acknowledgment information (finally allocated RB information, start time and duration time of a subframe, etc.).

Then, the target TP and the UE start a two-way transmission process of data.

In the embodiment of the present disclosure, resource allocation of the virtual cell is taken into unified consideration of the Master TP, and only one TP transmits data at the same time point.

The Master TP calculates a PF on the basis of CSI of each Slave TP, PRB occupation information, a historical service throughput and a logic channel buffer occupation rate. The Master TP selects specific TPs in a descending order of the priority of the PF.

It is necessary to take the number of bits capable of being transmitted by the TP into consideration, and it is also necessary to take an MAC logic channel buffer occupation rate into consideration for calculating the PF, and the PF is inversely proportional to the logic channel buffer occupation rate. Thus, the maximum throughput of the system may be ensured, and the aim of traffic control is effectively achieved.

A resource negotiation process in the virtual cell includes a resource request initiated by the Master TP, a resource answer message returned by the Slave TP, and a resource acknowledgment message finally fed back by the Master TP. The resource negotiation content includes: a frequency domain RB resource and a time domain subframe resource.

A resource negotiation process between the virtual cells includes a resource request process and a resource answer process. The resource negotiation content includes: a frequency domain RB resource and a time domain subframe resource. When there is a conflict in the resource negotiation process between the virtual cells, a request of a time frequency resource for a small subframe number is high-priority.

Embodiment 2 of the present disclosure will be illustrated below in conjunction with the drawings.

When receiving resource allocation request messages sent by Master TPs of multiple different virtual cells, the Slave TP judges whether resources requested by the resource allocation request messages of the Master TPs from the multiple different virtual cells have conflicts;

when the resources requested by the resource allocation request messages of the Master TPs from the multiple different virtual cells have conflicts, the Slave TP selectively sends a resource allocation acknowledgement message containing an accepting cell to a sender namely a Master TP of a resource allocation request message having an early arrival time granularity, and sends a resource allocation acknowledgement message containing a rejection cell to a sender namely a Master TP of other resource allocation request messages; or,

the Slave TP selectively sends a resource allocation acknowledgement message containing an accepting cell to a sender namely a Master TP of a resource allocation request message having a small start subframe in resource allocation request messages having the same arrival time granularity, and sends a resource allocation acknowledgement message containing a rejection cell to a sender namely a Master TP of other resource allocation request messages.

When the resources requested by the resource allocation request messages of the Master TPs from the multiple different virtual cells do not have conflicts, the Slave TP sends the resource allocation acknowledgement message containing the accepting cell to the sender namely the Master TP of each resource allocation request message.

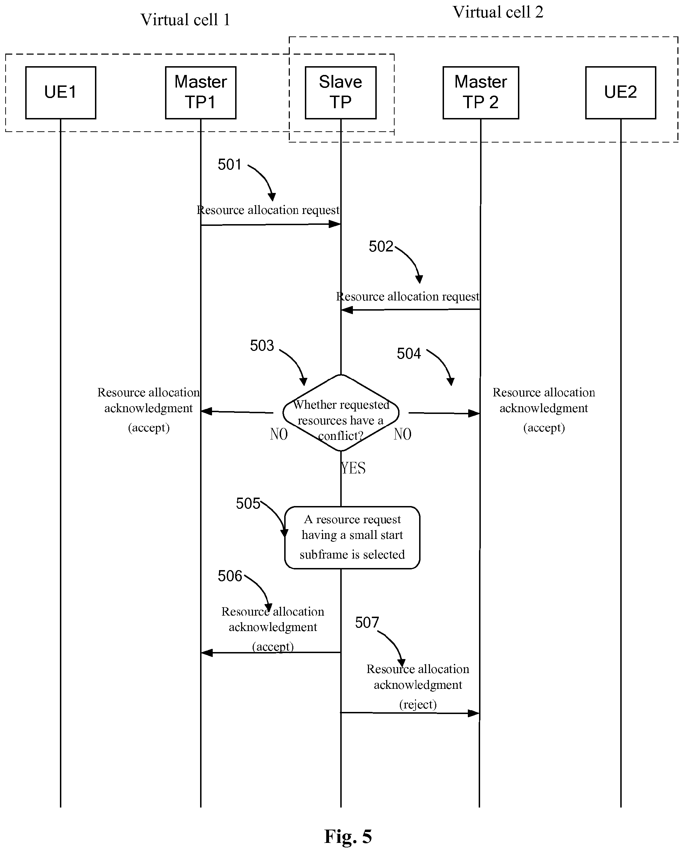

Fig. 5 is a flowchart of a method for allocating virtual cell resource according to embodiment 2 of the present disclosure. A flowchart of a method for allocating virtual cell resource according to an embodiment of the present disclosure is as shown in Fig. 5. Wherein, UE1, Master TP1 and Slave TP constitute virtual cell 1, UE2, Master TP2 and Slave TP constitute virtual cell 2, and Slave TP belongs to members of both virtual cell 1 and virtual cell 2.

The steps are as follows.

Step 501: Master TP1 of virtual cell 1 sends a resource allocation request message to Slave TP, the message including: number of RBs to be allocated, an RB index, a scheduling start subframe, and duration time of scheduling.

Step 502: Master TP2 of virtual cell 2 sends a resource allocation request message to Slave TP likewise, the message including: number of RBs to be allocated, an RB index, a scheduling start subframe, and duration time of scheduling.

Step 503: After receiving the resource allocation request message, Slave TP judges whether resource allocation requests from the two virtual cells have a conflict.

Step 504: If resource allocation does not have a conflict, a resource allocation acknowledgment message is returned to Master TP1 and Master TP2 respectively, a contained cell being acceptable.

Step 505: If resource allocation has a conflict, it is judged whether arrival time of the two resource allocation requests is in the same time granularity (e.g., subframe); if the two resource allocation requests arrive at the same time, a resource request having a small start subframe is selected to serve as a response accepting request; and otherwise, a resource allocation request having an early arrival time granularity is selected to serve as a response accepting request.

Step 506: Slave TP returns a resource allocation acknowledgment message to Master TP1 of virtual cell 1, the message containing an accepting cell.

Step 507: Slave TP returns a resource allocation acknowledgment message to Master TP2 of virtual cell 2, the message containing a rejection cell. The whole flow is ended.

Embodiment 3 of the present disclosure will be illustrated below in conjunction with the drawings.

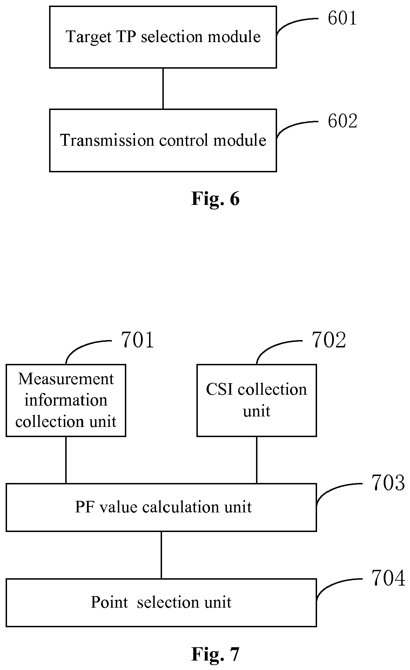

The embodiment of the present disclosure provides a device for allocating virtual cell resource. Fig. 6 is a structural diagram of a device for allocating virtual cell resource according to embodiment 3 of the present disclosure. The structure of the device is as shown in Fig. 6. The device includes:

a target TP selection module 601, configured to select, according to demands of a UE, a Slave TP serving as a target TP; and
a transmission control module 602, configured to instruct the UE to perform data transmission with the target TP.

In the present embodiment, Fig. 7 is a structural diagram of a target TP selection module 601 in Fig. 6. The structure of the target TP selection module 601 is as shown in Fig. 7. The target TP selection module 601 includes:

a measurement information collection unit 701, configured to collect measurement information periodically reported by each Slave TP, the measurement information containing:

uplink CQI information, PRB occupation information, a historical service throughput and a logic channel buffer occupation rate;
a CSI collection unit 702, configured to collect CSI, reported by the UE, of each virtual cell member;
a PF value calculation unit 703, configured to calculate, according to the measurement information and the CSI, a PF value of each Slave TP; and
a point selection unit 704, configured to select a Slave TP that is capable of allocating resources to perform data transmission with the UE and has a maximum PF value to serve as a target TP.

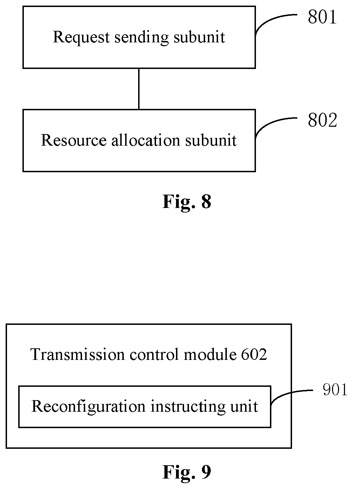

In the present embodiment, Fig. 8 is a structural diagram of a point selection unit 704 in Fig. 7. The structure of the point selection unit 704 is as shown in Fig. 8. The point selection unit 704 includes:

a request sending subunit 801, configured to send a resource allocation request message to a Slave TP having a maximum PF value, the resource allocation request message containing:

number of needed RBs, a position index of an RB, start time and duration time of subframe scheduling, and an MAC PDU SN specifically scheduled; and
a resource allocation subunit 802, configured to select, when receiving a resource allocation acknowledgement message that is sent by the Slave TP having the maximum PF value and contains an accepting cell, the Slave TP to serve as a target TP, and send the resource allocation acknowledgement message to the target TP.

In the present embodiment, Fig. 9 is a structural diagram of a transmission control module 602 in Fig. 6. The structure of the transmission control module 602 is as shown in Fig. 9. The transmission control module 602 includes:

a reconfiguration instructing unit 901, configured to inform the UE of a resource scheduling result through an RRC connecting reconfiguration message, and instruct the UE to perform data transmission with the target TP, the RRC connecting reconfiguration message containing:

an ID of a target TP and resource allocation acknowledgment information.

The device for allocating virtual cell resource may be integrated in a Master TP, and corresponding functions are completed by the Master TP.

The present disclosure also provides a system for allocating virtual cell resource, which may include a UE in an identical virtual cell, a Master TP and a plurality of Slave TPs.

The Master TP is configured to select, according to demands of the UE, a Slave TP serving as a target TP, and instruct the UE to perform data transmission with the target TP.

In the present embodiment, the Slave TP is configured to: judge, when receiving resource allocation request messages sent by Master TPs of multiple different virtual cells, whether resources requested by the resource allocation request messages of the Master TPs from the multiple different virtual cells have conflicts; when the resources requested by the resource allocation request messages of the Master TPs from the multiple different virtual cells have conflicts, selectively send a resource allocation acknowledgement message containing an accepting cell to a sender namely a Master TP of a resource allocation request message having an early arrival time granularity, and send a resource allocation acknowledgement message containing a rejection cell to a sender namely a Master TP of other resource allocation request messages; or, selectively send a resource allocation acknowledgement message containing an accepting cell to a sender namely a Master TP of a resource allocation request message having a small start subframe in resource allocation request messages having the same arrival time granularity, and send a resource allocation acknowledgement message containing a rejection cell to a sender namely a Master TP of other resource allocation request messages.

The Master TP specifically is a Master TP, the Slave TP specifically is a Slave TP, and the target TP specifically is a target Slave TP.

The embodiments of the present disclosure provide a method for allocating virtual cell resource, device and system. A Master TP selects, according to demands of a UE, a Slave TP serving as a target TP; and the Master TP instructs the UE to perform data transmission with the target TP. A resource negotiation for a high average user throughput is achieved, and the problem of absence of a resource scheduling mechanism for a data transmission process in a virtual cell is solved. The embodiments of the present disclosure give dynamic resource allocation of the virtual cell under an UDN scenario, the Master TP selects an optimum Slave TP to serve as the target TP according to information such as current CSI of each Slave TP, an RB usage situation and a buffer occupation rate, and an average user throughput may be effectively improved. Solutions for resource negations in a virtual cell and between virtual cells are proposed, thereby effectively solving the problem of resource conflicts probably resulting from multiple roles of TPs in different virtual cells.

Those of ordinary skill in the art may understand that all or some of the steps of the above-mentioned embodiment may be implemented by using a computer program flow. The computer program may be stored in a computer-readable storage medium. The computer program is executed on a corresponding hardware platform (such as system, equipment, device, and device). During execution, the computer program includes one of the steps of the method embodiment or a combination thereof.

Alternatively, all or some of the steps of the above-mentioned embodiment may also be implemented by using an integrated circuit. These steps may be manufactured into integrated circuit modules respectively, or a plurality of modules or steps therein are manufactured into a single integrated circuit module. Thus, the present disclosure is not limited to a combination of any specific hardware and software.

Each device/functional module/function unit in the above-mentioned embodiment may be implemented by using a general computation device. They may be centralized on a single computation device or may be distributed on a network composed of a plurality of computation devices.

When each device/functional module/function unit in the above-mentioned embodiment is implemented in a form of a software function module and is sold or used as an independent product, the product may also be stored in a computer-readable storage medium. The above-mentioned computer-readable storage medium may be a read-only memory, a magnetic disk or an optical disk.

Any person skilled in the art may easily think of variations or replacements within the disclosed technical scope of the present disclosure. These variations or replacements should fall within the scope of protection of the present disclosure. Thus, the scope of protection of the present disclosure should refer to the scope of protection of the claims.

## Industrial Applicability

On the basis of the above-mentioned technical solution provided in the embodiments of the present disclosure, a Master TP selects, according to demands of a UE, a Slave TP serving as a target TP; and the Master TP instructs the UE to perform data transmission with the target TP. A resource negotiation for a high average user throughput is achieved, and the problem of absence of a resource scheduling mechanism for a data transmission process in a virtual cell is solved.

**Claims**

1. A method for allocating virtual cell resource, comprising:

   selecting, by a Master Transmission Point (Master TP) according to demands of a User Equipment (UE), a Slave TP serving as a target TP; and
   instructing, by the Master TP, the UE to perform data transmission with the target TP.

2. The method as claimed in claim 1, wherein selecting, by a Master TP according to demands of a UE, a Slave TP serving as a target TP comprises:

   collecting, by the Master TP, measurement information periodically reported by each Slave TP, the measurement information containing:

      an uplink Channel Quality Indicator (CQI), Physical Resource Block (PRB) occupation information, a historical service throughput and a logic channel buffer occupation rate;
      collecting, by the Master TP, Channel State Information (CSI), reported by the UE, of each virtual cell member;
      calculating, by the Master TP according to the measurement information and the CSI, a Proportional Fairness factor (PF) value of each Slave TP; and
      selecting, by the Master TP, a Slave TP that is capable of allocating resources to perform data transmission with the UE and has a maximum PF value to serve as a target TP.

3. The method as claimed in claim 2, wherein selecting, by the Master TP, a Slave TP that is capable of allocating resources to perform data transmission with the UE and has a maximum PF value to serve as a target TP comprises:

   sending, by the Master TP, a resource allocation request message to a Slave TP having a maximum PF value, the resource allocation request message containing:

      number of needed RBs, a position index of an RB, start time and duration time of subframe scheduling, and a Media Access Control Packet Data Unit Sequence Number (MAC PDU SN) specifically scheduled; and
when receiving a resource allocation acknowledgement message that is sent by the Slave TP having the maximum PF value and contains an accepting cell, selecting, by the Master TP, the Slave TP to serve as a target TP, and sending the resource allocation acknowledgement message to the target TP.

4. The method as claimed in claim 3, wherein after the step of sending, by the Master TP, a resource allocation request message to a Slave TP having a maximum PF value, the method further comprises:

   when receiving resource allocation request messages sent by Master TPs of multiple different virtual cells, judging, by the Slave TP, whether resources requested by the resource allocation request messages of the Master TPs from the multiple different virtual cells have conflicts;
   when the resources requested by the resource allocation request messages of the Master TPs from the multiple different virtual cells have conflicts, selectively sending, by the Slave TP, a resource allocation acknowledgement message containing an accepting cell to a sender namely a Master TP of a resource allocation request message having an early arrival time granularity, and sending a resource allocation acknowledgement message containing a rejection cell to a sender namely a Master TP of other resource allocation request messages; or,
   selectively sending, by the Slave TP, a resource allocation acknowledgement message containing an accepting cell to a sender namely a Master TP of a resource allocation request message having a small start subframe in resource allocation request messages having the same arrival time granularity, and sending a resource allocation acknowledgement message containing a rejection cell to a sender namely a Master TP of other resource allocation request messages.

5. The method as claimed in claim 4, wherein after the step of judging, by the Slave TP, whether resources requested by the resource allocation request messages of the Master TPs from the multiple different virtual cells have conflicts when receiving resource allocation request messages sent by Master TPs of multiple different virtual cells, the method further comprises:

   when the resources requested by the resource allocation request messages of the Master TPs from the multiple different virtual cells do not have conflicts, sending, by the Slave TP, the resource allocation acknowledgement message containing the accepting cell to the sender namely the Master TP of each resource allocation request message.

6. The method as claimed in claim 3, wherein after the step of sending, by the Master TP, a resource allocation request message to a Slave TP having a maximum PF value, the method further comprises:

   receiving, by the Master TP, a rejection response message sent by the Slave TP; and sending, by the Master TP, resource allocation request messages to the Slave TPs in sequence in a descending order of the PF value and receives response messages returned by the Slave TPs until a resource allocation acknowledgment message that is returned by a Slave TP and contains an accepting cell is received, wherein the Slave TP that sends the resource allocation acknowledgment message containing the accepting cell serves as a target TP.

7. The method as claimed in claim 2, wherein calculating, by the Master TP according to the measurement information and the CSI, a PF value of each Slave TP specifically comprises:

   calculating, by the Master TP, the PF value by using the following formula:

$$PF_i = \frac{\sum_{j=1}^{RBNum} \sum_{k=1}^{RankNum} BitNum(j, k)}{\alpha_{RlcBuff}},$$

   where $i = 1,..., n$, RBNum is number of RBs capable of being allocated by a Slave TP, RankNum is number of Rank Indications (RIs) in reported CSI, and BitNum is number of bits borne by a single RB calculated according to a symbol efficiency mapped by a CQI value.

8. The method as claimed in claim 1, wherein instructing, by the Master TP, the UE to perform data transmission with the target TP comprises:

   informing, by the Master TP, the UE of a resource scheduling result through a Radio Resource Control (RRC) connecting reconfiguration message, and instructing the UE to perform data transmission with the target TP, the RRC connecting reconfiguration message containing:

   an Identifier of Base Station (ID) of a target TP and resource allocation acknowledgment information.

9. A device for allocating virtual cell resource, comprising:

   a target Transmission Point (TP) selection module, configured to select, according to demands of a User Equipment (UE), a Slave TP serving as a target TP; and
   a transmission control module, configured to instruct the UE to perform data transmission with the target TP.

10. The device as claimed in claim 9, wherein the target TP selection module comprises:

   a measurement information collection unit, configured to collect measurement information periodically reported by each Slave TP, the measurement information containing:

      uplink Channel Quality Indicator (CQI) information, Physical Resource Block (PRB) occupation information, a historical service throughput and a logic channel buffer occupation rate;
      a Channel State Information (CSI) collection unit, configured to collect CSI, reported by the UE, of each virtual cell member;
      a Proportional Fairness factor (PF) value calculation unit, configured to calculate, according to the measurement information and the CSI, a PF value of each Slave TP; and
      a point selection unit, configured to select a Slave TP that is capable of allocating resources to perform data transmission with the UE and has a maximum PF value to serve as a target TP.

11. The device as claimed in claim 10, wherein the point selection unit comprises:

   a request sending subunit, configured to send a resource allocation request message to a Slave TP having a maximum PF value, the resource allocation request message containing:

      number of needed RBs, a position index of an RB, start time and duration time of subframe scheduling, and a Media Access Control Packet Data Unit Sequence Number (MAC PDU SN) specifically scheduled; and
      a resource allocation subunit, configured to select, when receiving a resource allocation acknowledgement message that is sent by the Slave TP having the maximum PF value and contains an accepting cell, the Slave TP to serve as a target TP, and send the resource allocation acknowledgement message to the target TP.

12. The device as claimed in claim 9, wherein the transmission control module comprises:

a reconfiguration instructing unit, configured to inform the UE of a resource scheduling result through a Radio Resource Control (RRC) connecting reconfiguration message, and instruct the UE to perform data transmission with the target TP, the RRC connecting reconfiguration message containing:

an Identifier of Base Station (ID) of a target TP and resource allocation acknowledgment information.

13. A system for allocating virtual cell resource, comprising a User Equipment (UE) in an identical virtual cell, a Master Transmission Point (Master TP) and a plurality of Slave TPs, wherein
the Master TP is configured to select, according to demands of the UE, a Slave TP serving as a target TP, and instruct the UE to perform data transmission with the target TP.

14. The system as claimed in claim 13, wherein
the Slave TP is further configured to judge, when receiving resource allocation request messages sent by Master TPs of multiple different virtual cells, whether resources requested by the resource allocation request messages of the Master TPs from the multiple different virtual cells have conflicts;
when the resources requested by the resource allocation request messages of the Master TPs from the multiple different virtual cells have conflicts, selectively send a resource allocation acknowledgement message containing an accepting cell to a sender namely a Master TP of a resource allocation request message having an early arrival time granularity, and send a resource allocation acknowledgement message containing a rejection cell to a sender namely a Master TP of other resource allocation request messages; or
selectively send a resource allocation acknowledgement message containing an accepting cell to a sender namely a Master TP of a resource allocation request message having a small start subframe in resource allocation request messages having the same arrival time granularity, and send a resource allocation acknowledgement message containing a rejection cell to a sender namely a Master TP of other resource allocation request messages.

**Fig. 1**

**Fig. 2**

**Fig. 3**

**Fig. 4**

Virtual cell 1

Virtual cell 2

UE1

Master TP1

Slave TP

Master TP 2

UE2

501

Resource allocation request

502

Resource allocation request

503

504

Resource allocation acknowledgment (accept)

Whether requested resources have a conflict?

NO

NO

Resource allocation acknowledgment (accept)

YES

505

A resource request having a small start subframe is selected

506

Resource allocation acknowledgment (accept)

507

Resource allocation acknowledgment (reject)

**Fig. 5**

Target TP selection module ⎯ 601

Transmission control module ⎯ 602

**Fig. 6**

701 — Measurement information collection unit

702 — CSI collection unit

PF value calculation unit ⎯ 703

Point selection unit ⎯ 704

**Fig. 7**

Request sending subunit 801

Resource allocation subunit 802

**Fig. 8**

Transmission control module 602

Reconfiguration instructing unit 901

**Fig. 9**

## INTERNATIONAL SEARCH REPORT

| | International application No. |
|---|---|
| | PCT/CN2015/077541 |

**A. CLASSIFICATION OF SUBJECT MATTER**

H04W 72/04 (2009.01) i

According to International Patent Classification (IPC) or to both national classification and IPC

**B. FIELDS SEARCHED**

Minimum documentation searched (classification system followed by classification symbols)

H04W; H04L; H04Q 7/-

Documentation searched other than minimum documentation to the extent that such documents are included in the fields searched

Electronic data base consulted during the international search (name of data base and, where practicable, search terms used)

CPRSABS, CNABS, CNTXT, CNKI, VEN: virtual cell, father, assist, Ultra-Dense Networks, virtual, master, primary, serve, parent, slave, secondary, child, cooperat+, coordinat+, joint+, multi-point, base station, BS, node, cell, set, group

**C. DOCUMENTS CONSIDERED TO BE RELEVANT**

| Category* | Citation of document, with indication, where appropriate, of the relevant passages | Relevant to claim No. |
|---|---|---|
| X | CN 101583161 A (BEIJING UNIVERSITY OF POSTS AND TELECOMMUNICATIONS), 18 November 2009 (18.11.2009), description, page 5, paragraph 2 to page 10, penultimate paragraph, and figures 1-3 | 1-6, 8-14 |
| A | CN 101883402 A (ZTE CORP.), 10 November 2010 (10.11.2010), the whole document | 1-14 |
| A | WO 2014018467 A1 (APPLE INC.), 30 January 2014 (30.01.2014), the whole document | 1-14 |

☐ Further documents are listed in the continuation of Box C.　　☒ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 05 August 2015 (05.08.2015) | **24 August 2015 (24.08.2015)** |

| Name and mailing address of the ISA/CN: State Intellectual Property Office of the P. R. China No. 6, Xitucheng Road, Jimenqiao Haidian District, Beijing 100088, China Facsimile No.: (86-10) 62019451 | Authorized officer **LU, Jing** Telephone No.: (86-10) **62412158** |
|---|---|

Form PCT/ISA/210 (second sheet) (July 2009)

## INTERNATIONAL SEARCH REPORT
### Information on patent family members

| International application No. |
| --- |
| **PCT/CN2015/077541** |

| Patent Documents referred in the Report | Publication Date | Patent Family | Publication Date |
| --- | --- | --- | --- |
| CN 101583161 A | 18 November 2009 | CN 101583161 B | 13 February 2013 |
| CN 101883402 A | 10 November 2010 | WO 2010127638 A1 | 11 November 2010 |
| WO 2014018467 A1 | 30 January 2014 | TW 201409982 A | 01 March 2014 |
| | | DE 112013003165 T5 | 19 March 2015 |
| | | US 8837320 B2 | 16 September 2014 |
| | | TW 201409981 A | 01 March 2014 |
| | | CN 104662809 A | 27 May 2015 |
| | | US 2014022925 A1 | 23 January 2014 |
| | | US 2014022924 A1 | 23 January 2014 |
| | | AU 2013293247 A1 | 12 February 2015 |
| | | EP 2875590 A1 | 27 May 2015 |
| | | CN 104604150 A | 06 May 2015 |
| | | KR 20150038198 A | 08 April 2015 |
| | | WO 2014018465 A1 | 30 January 2014 |
| | | US 9071997 B2 | 30 June 2015 |

Form PCT/ISA/210 (patent family annex) (July 2009)